# DEMANDE DE BREVET EUROPEEN

(11) **EP 4 717 602 A1**
(43) Date de publication de la demande: **01.04.2026**
(21) Numéro de dépôt: 25204664.4
(22) Date de dépôt: 25.09.2025
(51) Int. Cl.: B64D 27/18, B64D 27/40

(54) **ENSEMBLE DE PROPULSION D'AÉRONEF COMPRENANT UNE STRUCTURE PORTEUSE INTERCALÉE ENTRE UNE MOTORISATION ET UNE STRUCTURE PRIMAIRE D'UN MÂT**

(30) Priorité: 30.09.2024 FR 2410478
(71) Demandeur: AIRBUS OPERATIONS (S.A.S.), 31060 Toulouse (FR)
(72) Inventeur: LANSIAUX, Rémi, 31060 TOULOUSE (FR); CHARTON, Nicolas, 31060 TOULOUSE (FR); VIGNES, Jean-Baptiste, 31060 TOULOUSE (FR); BENNAIEM, Mohammed-Amine, 31060 TOULOUSE (FR); VINOT, Julien, 31060 TOULOUSE (FR); CARCENAC, Xavier, 31060 TOULOUSE (FR)
(74) Mandataire: Fantin, Laurent

(57) **Abrégé**

L'invention a pour objet un ensemble de propulsion (30) d'aéronef comprenant :
- une motorisation (32) qui comporte des parties avant et arrière décalées selon un axe longitudinal (X),
- une structure primaire (42) de mât (34),
- au moins une structure porteuse (48) qui s'étend selon l'axe longitudinal (X), distincte de la partie arrière et reliée à la partie avant de la motorisation (32),
- un système d'attache-moteur (46) qui comporte :
∘ au moins une attache avant (46.1) reliant directement la motorisation (32) et la structure primaire (42),
∘ au moins une attache arrière (46.2), décalée vers l'arrière par rapport à l'attache avant (46.1), reliant la structure primaire (42) et la structure porteuse (48).

Cette solution permet d'optimiser le transfert des efforts entre la motorisation (32) et la structure primaire (42) du mât.

## Description

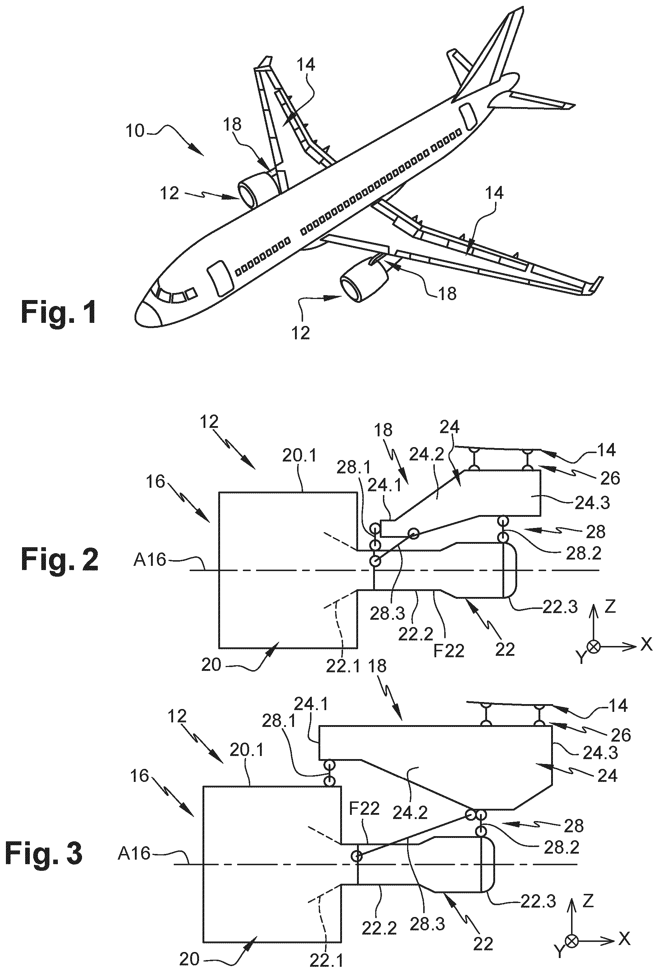

La présente demande se rapporte à un ensemble de propulsion d'aéronef comprenant une structure porteuse intercalée entre une motorisation et une structure primaire d'un mât. Selon une configuration visible sur les figures 1 à 3, un aéronef 10 comprend plusieurs ensembles de propulsion 12 qui sont positionnés sous la voilure 14 de l'aéronef 10.

Un ensemble de propulsion 12 comprend une motorisation 16, une nacelle (non représentée sur les figures 2 et 3) positionnée autour de la motorisation 16 ainsi qu'un mât 18 reliant la motorisation 16 au reste de l'aéronef 10, notamment à la voilure 14.

Pour la suite de la description, un axe longitudinal X est parallèle à l'axe de rotation A16 de la motorisation 16. Un plan transversal est un plan perpendiculaire à l'axe de rotation A16 de la motorisation 16. Un plan longitudinal est un plan passant par l'axe de rotation A16 de la motorisation 16. Une direction transversale et horizontale Y est une direction perpendiculaire à l'axe de rotation A16 de la motorisation 16 et horizontale. Une direction transversale et verticale Z est une direction perpendiculaire à l'axe de rotation A16 de la motorisation 16 et verticale. Un plan médian vertical PMV est un plan vertical contenant l'axe de rotation A16 de la motorisation 16. Un plan médian horizontal est un plan horizontal contenant l'axe de rotation A16 de la motorisation 16. Les termes avant et arrière font référence au sens d'écoulement du flux d'air dans la motorisation 16, ce dernier s'écoulant de l'avant vers l'arrière.

La motorisation 16 comprend une soufflante 20 qui comporte un carter de soufflante 20.1 ainsi qu'un cœur de réacteur 22 comprenant une partie avant 22.1 positionnée à l'intérieur de la soufflante 20, une partie centrale 22.2 ainsi qu'une partie arrière 22.3 intégrant notamment une tuyère. Selon une configuration, la partie centrale 22.2 présente une section transversale inférieure à celles des parties avant et arrière 22.1, 22.3. Le cœur de réacteur 22 présente une enveloppe extérieure appelée carter de motorisation F22.

Le mât 18 comprend une structure primaire 24, sous la forme d'un caisson, qui est reliée à la voilure 14 par un système d'attache-voilure 26 et à la motorisation 16 par un système d'attache-moteur 28. Cette structure primaire 24 comprend une extrémité avant 24.1, une partie médiane 24.2 et une extrémité arrière 24.3.

Selon un premier mode de réalisation visible sur la figure 2, le système d'attache moteur 28 comprend une attache avant 28.1 reliant l'extrémité avant 24.1 de la structure primaire 24 et la partie avant et/ou centrale 22.1, 22.2 du cœur de réacteur 22, une attache arrière 28.2 reliant l'extrémité arrière 24.3 de la structure primaire 24 et la partie arrière 22.3 du cœur de réacteur 22 ainsi que deux bielles 28.3, positionnées de manière symétrique par rapport au plan médian vertical PMV de la motorisation 16, reliant la structure primaire 24 et la partie avant et/ou centrale 22.1, 22.2 du cœur de réacteur 22.

Selon un deuxième mode de réalisation visible sur la figure 3, le système d'attache moteur 28 comprend une attache avant 28.1 qui relie l'extrémité avant 24.1 de la structure primaire 24 et le carter de soufflante 20.1 de la soufflante 20, une attache arrière 28.2 qui relie l'extrémité arrière 24.3 de la structure primaire 24 et la partie arrière 22.3 du cœur de réacteur 22 ainsi que deux bielles 28.3, positionnées de manière symétrique par rapport au plan médian vertical PMV de la motorisation 16, qui relient la structure primaire 24 et la partie avant et/ou centrale 22.1, 22.2 du cœur de réacteur 22.

Dans certaines circonstances, ces deux modes de réalisation ne permettent pas un transfert optimal des efforts entre la motorisation 16 et la structure primaire 24 du mât 18.

La présente invention vise à remédier à tout ou partie des inconvénients de l'art antérieur. A cet effet, l'invention a pour objet un ensemble de propulsion d'aéronef comprenant :
- une motorisation qui s'étend d'avant en arrière selon un axe longitudinal et comprend, à l'avant, une partie avant et, à l'arrière de la partie avant, une partie arrière correspondant à une partie d'un cœur de réacteur, les parties avant et arrière ayant chacune une forme circonférentielle, la partie avant ayant une section supérieure à celle de la partie arrière,
- une structure primaire de mât,
- un système d'attache-moteur reliant la structure primaire et la partie avant de la motorisation, le système d'attache-moteur comportant au moins une attache avant reliant directement la motorisation et la structure primaire.

Selon l'invention, l'ensemble de propulsion comprend au moins une structure porteuse s'étendant selon un axe parallèle à l'axe longitudinal et au moins une partie de la circonférence de la partie arrière de la motorisation, ladite structure porteuse étant distincte de la partie arrière de la motorisation, distante du cœur de réacteur et reliée à la partie avant de la motorisation, le système d'attache-moteur comprenant au moins une attache arrière, décalée vers l'arrière par rapport à l'attache avant, reliant la structure primaire et la structure porteuse.

Cette solution permet d'optimiser le transfert des efforts entre la motorisation et la structure primaire du mât, les efforts étant repris au niveau de la même partie de la motorisation. Selon une autre caractéristique, la structure porteuse est ajourée.

Selon une autre caractéristique, la structure porteuse est de forme sensiblement tubulaire Selon une autre caractéristique, l'attache avant et la structure porteuse sont reliées à la motorisation au niveau approximativement d'un même plan transversal d'attache.

Selon une autre caractéristique, la structure porteuse est une structure en treillis et comprend des renforts longilignes et/ou au moins un renfort transversal reliés entre eux de manière à former des mailles quadrilatères ou triangulaires.

Selon une autre caractéristique, la structure porteuse s'étend entre des extrémités avant et arrière, l'extrémité avant étant reliée à la motorisation, la structure porteuse comprenant au moins un renfort transversal situé au niveau de l'extrémité arrière.

Selon une autre caractéristique, la structure porteuse comprend au moins un renfort transversal intermédiaire, situé entre les extrémités avant et arrière.

Selon une autre caractéristique, l'attache arrière comprend :
- une poutre transversale solidaire de la structure primaire,
- au moins une première manille à deux points, positionnée d'un premier côté d'un plan médian vertical, reliée à la poutre transversale par un premier axe de pivotement et à la structure porteuse par un deuxième axe de pivotement,
- au moins une deuxième manille à trois points, positionnée d'un deuxième côté du plan médian vertical, reliée à la poutre transversale par des troisième et quatrième axes de pivotement et à la structure porteuse par un cinquième axe de pivotement.

Selon une autre caractéristique, le système d'attache-moteur comprend au moins une liaison de sécurité de type fail-safe, reliant la structure primaire et la structure porteuse ou la partie arrière de la motorisation, configurée pour ne pas former un chemin d'efforts lorsque l'attache arrière est opérationnelle et former un chemin d'efforts en cas d'endommagement de l'attache arrière.

Selon une autre caractéristique, le système d'attache-moteur comprend au moins une biellette qui présente une première extrémité reliée à la structure porteuse ainsi qu'une deuxième extrémité reliée à la motorisation.

Selon une autre caractéristique, le système d'attache-moteur comprend plusieurs biellettes positionnées de manière symétrique par rapport à un plan médian vertical et/ou par rapport à un plan médian horizontal.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique latérale d'un ensemble de propulsion d'aéronef (sans nacelle) illustrant un premier mode de réalisation de l'art antérieur,
- La figure 3 est une représentation schématique latérale d'un ensemble de propulsion d'aéronef (sans nacelle) illustrant un deuxième mode de réalisation de l'art antérieur,
- La figure 4 est une représentation schématique latérale d'un ensemble de propulsion d'aéronef (sans nacelle) illustrant un mode de réalisation de l'invention,
- La figure 5 est une coupe schématique transversale d'un ensemble de propulsion d'aéronef illustrant un mode de réalisation de l'invention,
- La figure 6 est une coupe schématique transversale d'un ensemble de propulsion d'aéronef illustrant un autre mode de réalisation de l'invention,
- La figure 7 est une vue arrière d'un ensemble de propulsion d'aéronef (sans nacelle) illustrant un mode de réalisation de l'invention,
- La figure 8 est une vue arrière d'une partie d'un système d'attache-moteur de l'ensemble de propulsion visible sur la figure 7,
- La figure 9 est une représentation schématique latérale d'un ensemble de propulsion d'aéronef comprenant une structure porteuse ajourée illustrant un premier mode de réalisation de l'invention,
- La figure 10 est une représentation schématique latérale d'un ensemble de propulsion d'aéronef comprenant une structure porteuse ajourée illustrant un deuxième mode de réalisation de l'invention,
- La figure 11 est une représentation schématique latérale d'un ensemble de propulsion d'aéronef comprenant une structure porteuse ajourée illustrant un troisième mode de réalisation de l'invention,
- La figure 12 est une vue arrière d'un ensemble de propulsion comportant une structure porteuse ajourée illustrant un mode de réalisation de l'invention,
- La figure 13 est une vue en perspective d'un ensemble de propulsion comportant une structure porteuse ajourée (sans nacelle) illustrant un mode de réalisation de l'invention,
- La figure 14 est une vue en perspective d'une partie d'un système d'attache-moteur de l'ensemble de propulsion visible sur la figure 13.

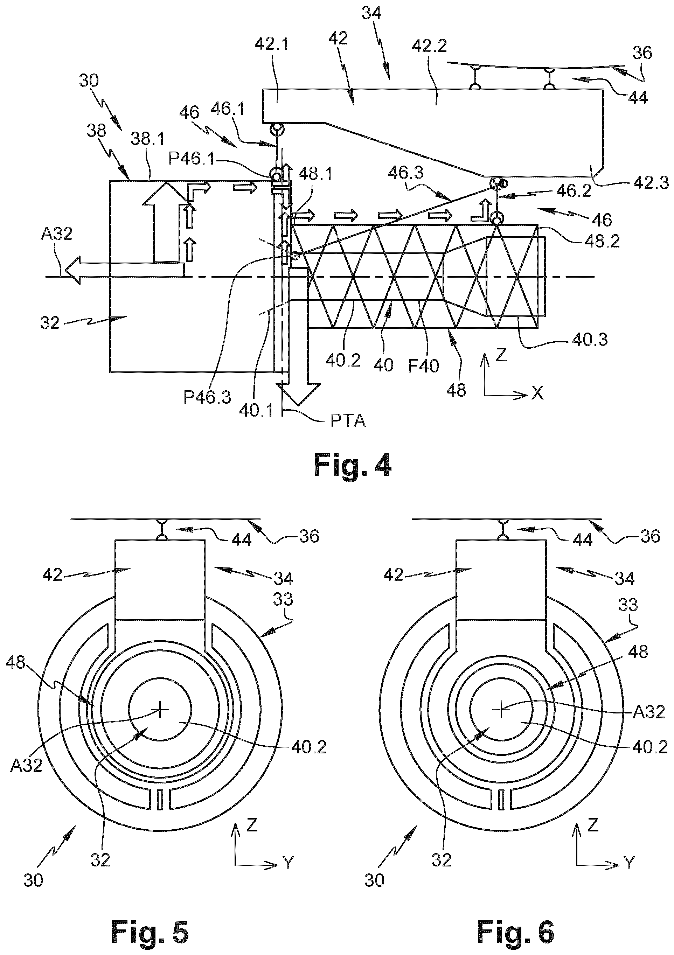

Selon un mode de réalisation visible sur les figures 4 à 14, un ensemble de propulsion 30 comprend une motorisation 32 s'étendant d'avant en arrière selon un axe longitudinal X et présentant un axe de rotation A32 parallèle à l'axe longitudinal X, une nacelle 33 (visible sur les figures 5 et 6) positionnée autour de la motorisation 32 ainsi qu'un mât 34 configuré pour relier l'ensemble de propulsion 30, et plus particulièrement la motorisation 32, à une voilure 36 d'un aéronef. Ce dernier comprend au moins un tel ensemble de propulsion 30.

Selon une configuration, la motorisation 32 comprend une soufflante 38 ainsi qu'un cœur de réacteur 40.

La soufflante 38 comporte un carter de soufflante 38.1. Le cœur de réacteur 40 comporte, de l'avant vers l'arrière, une partie avant 40.1 positionnée à l'intérieur de la soufflante 38, une partie centrale 40.2 ainsi qu'une partie arrière 40.3 intégrant notamment des turbines haute et basse pression et une tuyère. Selon une configuration, la partie centrale 40.2 présente une section transversale inférieure à celles des parties avant et arrière 40.1, 40.3. Le cœur de réacteur 40 présente une enveloppe extérieure appelée carter de motorisation F40.

La nacelle 33 présente une surface intérieure orientée vers la motorisation 32 qui délimite avec le carter de motorisation F40 du cœur de réacteur 40 un conduit annulaire dans lequel s'écoule en fonctionnement un flux d'air dit secondaire provenant de la soufflante 38.

Le mât 34 comprend une structure primaire 42, sous la forme d'un caisson, qui est reliée à la voilure 36 par un système d'attache-voilure 44 et à la motorisation 32 par un système d'attache-moteur 46. Cette structure primaire 42 comprend une extrémité avant 42.1, une partie médiane 42.2 et une extrémité arrière 42.3.

Le système d'attache-moteur 46 comprend au moins une attache avant 46.1 reliant directement la structure primaire 42 du mât et la motorisation 32 (la soufflante 38 et/ou la partie avant 40.1 du cœur de réacteur 40). Selon un mode de réalisation privilégié, l'attache avant 46.1 relie le carter de soufflante 38.1 de la soufflante 38 et l'extrémité avant 42.1 de la structure primaire 42. Cette attache avant 46.1 est configurée pour reprendre des efforts de poussée. Selon une autre configuration, l'attache avant 46.1 est identique à celle de l'art antérieur.

Selon une particularité de l'invention, l'ensemble de propulsion 30 comprend au moins une structure porteuse 48 qui s'étend entre des extrémités avant et arrière 48.1, 48.2 orientées selon un axe parallèle à l'axe longitudinal X, l'extrémité avant 48.1 étant reliée à la motorisation 32. Selon un mode de réalisation privilégié, la structure porteuse 48, plus particulièrement son extrémité avant 48.1, est reliée à la soufflante 38 et plus particulièrement au carter de soufflante 38.1.

La structure porteuse 48 est une structure distincte de la structure primaire 42 du mât et de l'enveloppe extérieure (ou carter de motorisation) F40 du cœur de réacteur 40. Cette structure porteuse 48 est espacée de l'enveloppe extérieure (ou carter de motorisation) F40 du cœur de réacteur 40 ainsi que de la surface intérieure de la nacelle 33. Ainsi, en fonctionnement, la structure porteuse 48 est située dans le flux d'air secondaire de sorte qu'une première partie de ce flux d'air secondaire s'écoule entre la structure porteuse 48 et la surface intérieure de la nacelle 33 et qu'une deuxième partie de ce flux d'air secondaire s'écoule entre la structure porteuse 48 et l'enveloppe extérieure (ou carter de motorisation) F40 du cœur de réacteur 40.

Selon un mode de réalisation, la structure porteuse 48 est ajourée. Par ajourée, on entend que la structure porteuse présente un taux d'ouverture (correspondant au ratio de la somme des surfaces ouvertes sur la surface totale) d'au moins 50%. De plus, contrairement à l'enveloppe extérieure F40 du cœur de réacteur 40, elle présente une rigidité suffisante pour former un chemin d'efforts entre la motorisation 32 et la structure primaire 42.

Le système d'attache-moteur 46 comprend au moins une attache arrière 46.2, décalée vers l'arrière par rapport à l'attache avant 46.1, reliant la structure primaire 42 et la structure porteuse 48. Selon un agencement, l'attache arrière 46.2 relie la partie médiane 42.2 et/ou l'extrémité arrière 42.3 de la structure primaire 42 et l'extrémité arrière 48.2 de la structure porteuse 48 ou une zone située à proximité de cette extrémité arrière 48.2.

Selon un mode de réalisation, le système d'attache-moteur 46 comprend deux bielles 46.3, positionnées de manière symétrique par rapport à un plan médian vertical PMV de la motorisation 32, reliant la structure primaire 42 et la partie avant et/ou centrale 40.1, 40.2 du cœur de réacteur 40.

Selon un agencement, l'attache avant 46.1 et les bielles 46.3 sont reliées à la motorisation 32 en des points d'ancrage P46.1, P46.3 positionnés approximativement dans un même plan transversal d'attache PTA.

Selon un mode de réalisation, le système d'attache-moteur 46 comprend au moins une attache avant 46.1 reliant directement la motorisation 32 et la structure primaire 42, ladite attache avant 46.1 étant reliée à la motorisation 32 au niveau d'un plan transversal d'attache PTA, la structure porteuse 48 étant également reliée à la motorisation 32 approximativement au niveau du plan transversal d'attache PTA.

La structure porteuse 48 est espacée, sur au moins une partie de la circonférence de la motorisation 32 et de préférence sur toute la circonférence, du cœur de réacteur 40 et positionnée entre le cœur de réacteur 40 et la nacelle 33.

Selon une première configuration, la structure porteuse ajourée 48 est une poutre qui ne s'étend pas autour du cœur de réacteur 40.

Selon une deuxième configuration, la structure porteuse 48 s'étend sur au moins une partie de la circonférence du cœur de réacteur 40. La structure porteuse 48 est tubulaire et s'étend tout autour du cœur de réacteur 40. La structure porteuse est distante du cœur de réacteur 40.

Selon un premier mode de réalisation visible sur la figure 4, la structure porteuse 48 est cylindrique.

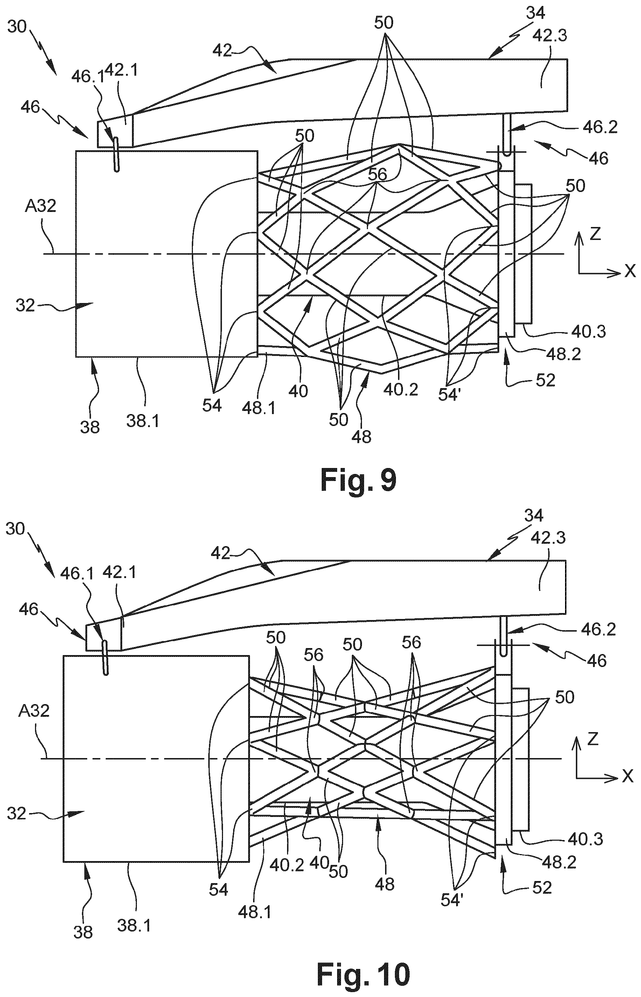

Selon un deuxième mode de réalisation visible sur la figure 9, la structure porteuse 48 présente une forme en tonneau.

Selon un troisième mode de réalisation visible sur la figure 10, la structure porteuse 48 présente une forme hyperboloïde.

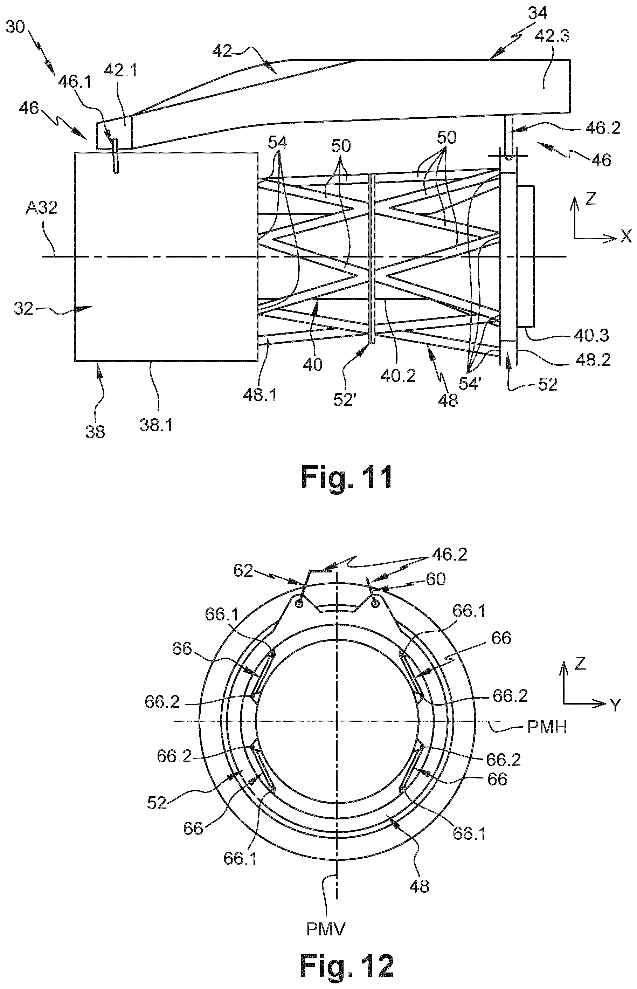

Selon un quatrième mode de réalisation visible sur la figure 11, la structure porteuse 48 est tronconique.

Bien entendu, l'invention n'est pas limitée à ces géométries pour la structure porteuse 48. Selon une configuration visible sur la figure 5, dans au moins un plan transversal, la structure porteuse 48 est plus proche de la nacelle 33 que du cœur de réacteur 40.

Selon une autre configuration visible sur la figure 6, dans au moins un plan transversal, la structure porteuse 48 est plus proche du cœur de réacteur 40 que de la nacelle 33.

Selon un mode de réalisation, la structure porteuse 48 est une structure en treillis et comprend plusieurs renforts longilignes 50 ainsi qu'au moins un renfort transversal 52. La structure porteuse 48 peut comprendre au moins un renfort longitudinal qui s'étend de son extrémité avant 48.1 jusqu'à son extrémité arrière 48.2.

Selon une configuration, chaque renfort longiligne 50 est rectiligne et présente une section circulaire. Bien entendu, l'invention n'est pas limitée à cette section pour les renforts longilignes 50.

Certains renforts longilignes 50 sont directement reliés à la motorisation 32, chacun par un système de liaison 54 comprenant par exemple au moins un élément parmi une broche, un rivet, un boulon ou tout autre élément de liaison.

Certains renforts longilignes 50 sont directement reliés à un renfort transversal 52, chacun par un système de liaison 54' comprenant par exemple au moins un élément parmi une broche, un rivet, un boulon ou tout autre élément de liaison.

Selon un mode de réalisation visible par exemple sur les figures 9, 10 et 13, la structure porteuse 48 en treillis comprend un unique renfort transversal 52 arrière, situé au niveau de son extrémité arrière 48.2.

Selon un autre mode de réalisation visible sur la figure 11, la structure porteuse 48 en treillis comprend un renfort transversal 52 arrière, situé au niveau de l'extrémité arrière 48.2, ainsi qu'au moins un renfort transversal 52' intermédiaire situé entre les extrémités avant et arrière 48.1, 48.2 de la structure porteuse 48 en treillis.

La structure porteuse 48 en treillis pourrait comprendre un renfort transversal avant situé au niveau de l'extrémité avant 48.1 de la structure porteuse 48 en treillis et directement relié à la motorisation.

Selon des modes de réalisation visibles sur les figures 9, 10 et 13, les renforts longilignes 50 sont reliés entre eux au niveau de nœuds 56 de manière à former des mailles quadrilatères. Selon ces modes de réalisation, les renforts longilignes 50 reliés au renfort transversal 52 ou à la motorisation 32 forment avec ces derniers des mailles triangulaires.

Selon un autre mode de réalisation visible sur la figure 11, les renforts longilignes 50, les renforts transversaux 52, 52' et la motorisation 32 sont reliés entre eux de manière à former des mailles triangulaires.

Bien entendu, l'invention n'est pas limitée à ces géométries pour les mailles. Généralement, la structure porteuse 48 en treillis comprend des renforts longilignes 50 et/ou au moins un renfort transversal 52 reliés entre eux de manière à former des mailles quadrilatères ou triangulaires afin d'obtenir une structure ajourée.

Les renforts longitudinaux et transversaux 50, 52, 52' peuvent être métalliques et/ou en matériau composite.

Selon un mode de réalisation, au moins un renfort transversal 52, 52' comprend au moins une plaque positionnée dans un plan transversal. Selon un agencement, au moins un renfort transversal 52 comprend deux plaques parallèles entre elles, faiblement espacées et reliées entre elles.

Selon une configuration, au moins un renfort transversal 52, 52' s'étend de manière continue sur toute la circonférence du cœur de réacteur 40 et forme un anneau. Selon une autre configuration, au moins un renfort transversal 52, 52' forme un U qui présente des extrémités orientées vers la structure primaire 42 ou vers la motorisation 32.

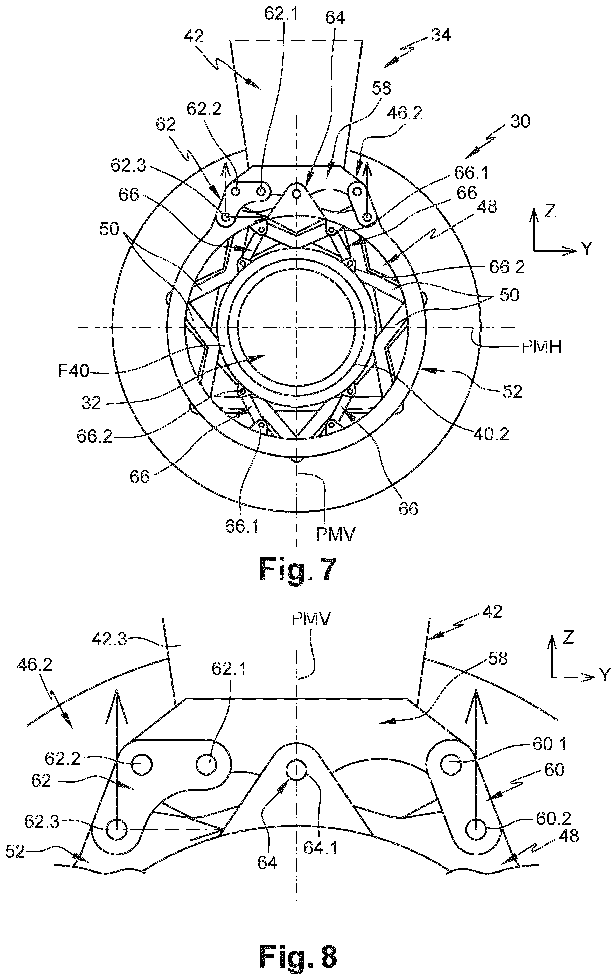

Selon un mode de réalisation visible en détails sur les figures 7 et 8, l'attache arrière 46.2 reliant la structure porteuse 48 et la structure primaire 42 est configurée pour reprendre des efforts selon des directions transversales horizontale et verticale Y, Z ainsi qu'un couple autour de l'axe de rotation A32 de la motorisation 32. Elle comprend :
- une poutre transversale 58 solidaire de la structure primaire 42,
- au moins une première manille à deux points 60, positionnée d'un premier côté du plan médian vertical PMV, reliée à la poutre transversale 58 par un premier axe de pivotement 60.1 et à la structure porteuse 48 par un deuxième axe de pivotement 60.2,
- au moins une deuxième manille à trois points 62, positionnée d'un deuxième côté du plan médian vertical PMV, reliée à la poutre transversale 58 par des troisième et quatrième axes de pivotement 62.1, 62.2 et à la structure porteuse 48 par un cinquième axe de pivotement 62.3.

Les différents axes de pivotement 60.1, 60.2, 62.1, 62.2, 62.3 sont sensiblement parallèles entre eux et à l'axe longitudinal X.

Selon ce mode de réalisation, la première manille à deux points 60 est configurée pour assurer un transfert des efforts selon un axe sensiblement vertical. En complément, la deuxième manille à trois points 62 est configurée pour assurer un transfert des efforts selon les directions transversales horizontale et verticale Y, Z. Les première et deuxième manilles 60, 62 permettent de reprendre les efforts de torsion selon l'axe longitudinal X.

Selon un mode de réalisation, le système d'attache-moteur 46 comprend au moins une liaison de sécurité de type fail-safe 64, 64', reliant la structure primaire 42 et la structure porteuse ajourée 48 ou la motorisation 32, notamment le cœur de réacteur 40, configurée pour ne pas former un chemin d'efforts lorsque l'attache arrière 46.2 est opérationnelle et fonctionne correctement et former un chemin d'efforts en cas d'endommagement de l'attache arrière 46.2.

Selon un agencement visible sur les figures 7 et 8, la liaison de sécurité de type fail-safe 64 relie la poutre transversale 58 et la structure porteuse 48, notamment l'extrémité arrière 48.2 de la structure porteuse 48.

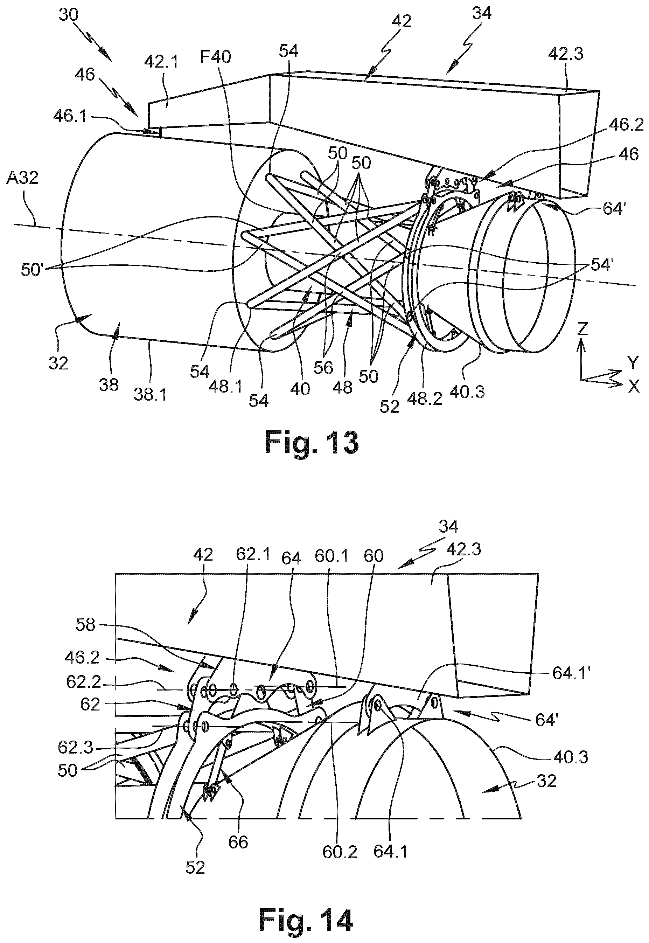

Selon un autre agencement visible sur les figures 13 et 14, la liaison de sécurité de type fail-safe 64' relie la structure primaire 42 et le cœur de réacteur 40, notamment la partie arrière 40.3 du cœur de réacteur 40.

Selon un mode de réalisation, la liaison de sécurité de type fail-safe 64, 64' comprend au moins un axe de sécurité 64.1 sensiblement parallèle à l'axe longitudinal X.

Selon un agencement visible sur la figure 8, la liaison de sécurité de type fail-safe 64 comprend un unique axe de sécurité 64.1 positionné au niveau du plan médian vertical PMV.

Selon un agencement visible sur la figure 14, la liaison de sécurité de type fail-safe 64' comprend deux axes de sécurité 64.1, 64.1' positionnés de manière symétrique par rapport au plan médian vertical PMV.

Selon un mode de réalisation visible sur les figures 7 et 12, le système d'attache-moteur 46 comprend au moins une biellette 66 qui présente une première extrémité 66.1 reliée à la structure porteuse 48, plus particulièrement au renfort transversal 52 arrière, ainsi qu'une deuxième extrémité 66.2 reliée à la motorisation 32 et plus particulièrement à la partie arrière 40.3 du cœur de réacteur 40.

Selon une configuration, la première extrémité 66.1 de la biellette 66 est reliée à la structure porteuse 48 par une articulation qui comprend au moins un axe de pivotement parallèle à l'axe longitudinal. En complément, la deuxième extrémité 66.2 de la biellette 66 est reliée au cœur de réacteur 40 par une articulation qui comprend au moins un axe de pivotement parallèle à l'axe longitudinal X.

Selon un agencement, le système d'attache-moteur 46 comprend plusieurs biellettes 66 positionnées de manière symétrique par rapport au plan médian vertical PMV.

Selon un mode de réalisation visible sur la figure 12, le système d'attache-moteur 46 comprend plusieurs biellettes 66 positionnées de manière symétrique par rapport à un plan médian horizontal PMH.

La (ou les) biellette(s) 66 permet(tent) de soutenir le cœur de réacteur 40 et de reprendre une partie du poids du cœur de réacteur 40. Elle(s) permet(tent) également de limiter les déplacements radiaux du cœur de réacteur 40.

Quel que soit le mode de réalisation, la structure porteuse 48, distincte de la partie arrière de la motorisation 32, permet d'assurer un transfert des efforts entre la motorisation 32 et la structure primaire 42 du mât, les efforts étant repris au niveau d'une même partie de la motorisation 32, à savoir le carter de soufflante 38.1.

Cette configuration permet d'optimiser le transfert de efforts entre la motorisation 32 et la structure primaire 42 du mât. La structure porteuse 48 étant largement ajourée, elle permet d'accéder aisément au cœur de réacteur 40. Enfin, le fait de prévoir une structure porteuse ajourée permet, à masse constante, d'obtenir une structure rigide qui présente une raideur importante dans toutes les directions.

Bien entendu, l'invention n'est pas limitée aux motorisations qui comprennent une soufflante positionnée dans un carter de soufflante. Ainsi, elle peut s'appliquer à toute motorisation qui s'étend d'avant en arrière selon un axe longitudinal et comprend une partie avant ainsi qu'une partie arrière reliée à la partie avant et décalée vers l'arrière selon l'axe longitudinal par rapport à la partie avant. La partie arrière peut être une partie du cœur de réacteur d'un turboréacteur ou d'un turbopropulseur. Selon les applications, la partie avant peut être un carter de soufflante 38.1 dans le cas d'une soufflante carénée. La partie avant peut également être une structure support sur laquelle est rapportée une soufflante non carénée ou une hélice non carénée ou toute autre structure d'une motorisation 32 positionnée à l'avant de cette dernière, qui est configurée pour former un chemin d'efforts pour les efforts de poussée générés lors de l'utilisation de la motorisation 32. Les parties avant et arrière ont chacune une forme circonférentielle et la partie avant présente une section supérieure à celle de la partie arrière de la motorisation 32.

## Revendications

1. Ensemble de propulsion (30) d'aéronef comprenant :
- une motorisation (32) qui s'étend d'avant en arrière selon un axe longitudinal (X) et comprend, à l'avant, une partie avant et, à l'arrière de la partie avant, une partie arrière correspondant à une partie d'un cœur de réacteur (40), les parties avant et arrière ayant chacune une forme circonférentielle, la partie avant ayant une section supérieure à celle de la partie arrière,
- une structure primaire (42) de mât (34),
- un système d'attache-moteur (46) reliant la structure primaire (42) et la partie avant de la motorisation (32), le système d'attache-moteur (46) comportant au moins une attache avant (46.1) reliant directement la motorisation (32) et la structure primaire (42) ;
**caractérisé en ce que** l'ensemble de propulsion (30) comprend au moins une structure porteuse (48) s'étendant selon un axe parallèle à l'axe longitudinal (X) et au moins une partie de la circonférence de la partie arrière de la motorisation (32), ladite structure porteuse étant distincte de la partie arrière de la motorisation (32), distante du cœur de réacteur (40) et reliée à la partie avant de la motorisation (32) et **en ce que** le système d'attache-moteur (46) comprend au moins une attache arrière (46.2), décalée vers l'arrière par rapport à l'attache avant (46.1), reliant la structure primaire (42) et la structure porteuse (48).

2. Ensemble de propulsion (30) selon la revendication précédente, **caractérisé en ce que** la structure porteuse (48) est ajourée.

3. Ensemble de propulsion (30) selon l'une des revendications précédentes, **caractérisé en ce que** la structure porteuse (48) est de forme sensiblement tubulaire.

4. Ensemble de propulsion (30) selon l'une des revendications précédentes, **caractérisé en ce que** l'attache avant (46.1) et la structure porteuse (48) sont reliées à la motorisation (32) au niveau approximativement d'un même plan transversal d'attache (PTA).

5. Ensemble de propulsion (30) selon l'une des revendications précédentes, **caractérisé en ce que** la structure porteuse (48) est une structure en treillis et comprend des renforts longilignes (50) et/ou au moins un renfort transversal (52) reliés entre eux de manière à former des mailles quadrilatères ou triangulaires.

6. Ensemble de propulsion (30) selon la revendication précédente, **caractérisé en ce que** la structure porteuse (48) s'étend entre des extrémités avant et arrière (48.1, 48.2), l'extrémité avant (48.1) étant reliée à la motorisation (32), la structure porteuse (48) comprenant au moins un renfort transversal (52) situé au niveau de l'extrémité arrière (48.2).

7. Ensemble de propulsion (30) selon la revendication précédente, **caractérisé en ce que** la structure porteuse (48) comprend au moins un renfort transversal (52') intermédiaire situé entre les extrémités avant et arrière (48.1, 48.2).

8. Ensemble de propulsion (30) selon l'une des revendications précédentes, **caractérisé en ce que** l'attache arrière (46.2) comprend :
- une poutre transversale (58) solidaire de la structure primaire (42),
- au moins une première manille à deux points (60), positionnée d'un premier côté d'un plan médian vertical (PMV), reliée à la poutre transversale (58) par un premier axe de pivotement (60.1) et à la structure porteuse (48) par un deuxième axe de pivotement (60.2),
- au moins une deuxième manille à trois points (62), positionnée d'un deuxième côté du plan médian vertical (PMV), reliée à la poutre transversale (58) par des troisième et quatrième axes de pivotement (62.1, 62.2) et à la structure porteuse (48) par un cinquième axe de pivotement (62.3).

9. Ensemble de propulsion (30) selon l'une des revendications précédentes, **caractérisé en ce que** le système d'attache-moteur (46) comprend au moins une liaison de sécurité de type fail-safe (64, 64'), reliant la structure primaire (42) et la structure porteuse (48) ou la partie arrière de la motorisation (32), configurée pour ne pas former un chemin d'efforts lorsque l'attache arrière (46.2) est opérationnelle et former un chemin d'efforts en cas d'endommagement de l'attache arrière (46.2).

10. Ensemble de propulsion (30) selon l'une des revendications précédentes, **caractérisé en ce que** le système d'attache-moteur (46) comprend au moins une biellette (66) qui présente une première extrémité (66.1) reliée à la structure porteuse (48) ainsi qu'une deuxième extrémité (66.2) reliée à la motorisation (32).

11. Ensemble de propulsion (30) selon la revendication précédente, **caractérisé en ce que** le système d'attache-moteur (46) comprend plusieurs biellettes (66) positionnées de manière symétrique par rapport à un plan médian vertical (PMV) et/ou par rapport à un plan médian horizontal (PMH).
